# EUROPEAN PATENT APPLICATION

(11) **EP 1 119 009 A1**
(43) Date of publication of application: **25.07.2001**
(21) Application number: 99925340.4
(22) Date of filing: 16.06.1999
(51) Int. Cl.: H01H 33/66

(54) **VACUUM SWITCH AND VACUUM SWITCH GEAR**

(30) Priority: 02.10.1998 JP 28066898
(71) Applicant: Hitachi, Ltd., Chiyoda-ku, Tokyo 101-8010 (JP)
(72) Inventor: KOJIMA, Katsunori, Kokubu Works, Hitachi-shi, Ibaraki 316-0035 (JP); TANIMIZU, Toru, Kokubu Works, Hitachi-shi, Ibaraki 316-0035 (JP); SHIBATA, Youzou, Kokubu Works, Hitachi-shi, Ibaraki 316-0035 (JP); YABU, Masato, Kokubu Works, Hitachi-shi, Ibaraki 316-0035 (JP); KOBAYASHI, Masato, Kokubu Works, Hitachi-shi, Ibaraki 316-0035 (JP)
(74) Representative: Strehl Schübel-Hopf & Partner
(86) International application number: JP9903210
(87) International publication number: WO0021104

(57) **Abstract**

In order to provide a vacuum switch capable of being formed in a very small size and a switchgear using the vacuum switch, in a vacuum switch comprising a first grounded vacuum container 1 for containing a breaker; a second grounded vacuum container 2 for containing an isolator 40 and a grounding unit 30; and an insulating spacer 8 for electrically insulating and connecting the first vacuum container 1 and the second vacuum container 2, a movable blade and operating rods extracted from the breaker and the isolator and the grounding unit are disposed in a nearly equal direction.

## Description

### BACKGROUND OF THE INVENTION

### FIELD OF THE INVENTION

The present invention relates to a vacuum switch and a vacuum switchgear using the vacuum switch and, more particularly to a vacuum switch and a vacuum switchgear using the vacuum switch suitable for reducing its size.

### DESCRIPTION OF THE RELATED ART

As for a distribution and transformation system aiming to compact size, an SF₆ gas insulation switchgear is disclosed, for example, in Japanese Patent Application Laid-Open No.3-273804. In the switchgear, a breaker, two isolators and a grounding switch individually fabricated are contained in a unit chamber and a bus chamber which are formed by filling the insulation gas in the distribution box. In a case where the switchgear is used as a vacuum switchgear, a movable electrode is vertically moved to a fixed electrode by an actuator to make and break a circuit. As a vacuum switchgear disclosed in Japanese Patent Application Laid-Open No.55-143727, there is a switchgear in which a movable electrode is horizontally rotated around a main axis to come in and off contact with a fixed electrode, that is, make and break a circuit. Further, as disclosed in Japanese Patent Application Laid-Open No.9-153320, there is a switchgear in which a movable conductor provided in a single vacuum container is moved on a close position, a open position, an isolation position and a grounding position while being rotated between a fixed conductor and a grounding conductor.

The SF₆ gas insulation switchgear disclosed in Japanese Patent Application Laid-Open No.3-273804 uses SF₆ gas. Use of SF₆ gas is required to be reduced from the viewpoint of prevention of global warming. Therefore, a switchgear not using SF₆ gas is required. The switchgear disclosed in Japanese Patent Application Laid-Open No.55-143727 needs sufficient safety measures in order to perform maintenance and inspection of the distribution and transformation system because the container is not grounded. That is, it is necessary that remaining charge and induced current are conducted to the ground by opening an isolator provided separately from a breaker and grounding a grounding switch after breaking the breaker. Further, since the components are individually disposed, there is a difficulty in making the switchgear small in size. On the other hand, although the switchgear disclosed in Japanese Patent Application Laid-Open No.9-153320 is better in small size, there is a disadvantage in that all the functions are lost if a failure occurs because the close position, the open position, the isolation position and the grounding position are disposed in the single vacuum container.

A first object of the present invention is to provide a vacuum switch capable of being made extremely small in size by improving insulation performance, and a switchgear using the vacuum switch.

A second object of the present invention is to provide a vacuum switch capable of coping with the variety of systems, and a switchgear using the vacuum switch.

A third object of the present invention is to provide a vacuum switch improved in assembling capability, and a switchgear using the vacuum switch.

A fourth object of the present invention is to provide a vacuum switch easily attaching a load side conductor, and a switchgear using the vacuum switch.

### SUMMARY OF THE INVENTION

In order to attain the above-described objects, a vacuum switch in accordance with the present invention is constructed so that the vacuum switch comprises a first grounded vacuum container for containing a breaker; a second grounded vacuum container for containing an isolator and a grounding unit; and an insulating spacer for electrically insulating the first vacuum container and the second vacuum container, wherein the first vacuum container and the second vacuum container are disposed substantially on a single axis, and bushings extracted from the first container and the second container are extended in a nearly equal direction from the axis. A movable blade for operating a movable electrode of the breaker and rods for operating a movable conductor of the isolator and the grounding unit are disposed in a nearly equal direction to said axis.

Further, the present invention provides a vacuum switch which comprises a first grounded vacuum container for containing a breaker and a second grounded vacuum container for containing an isolator and a grounding unit are disposed on a single axis, and a load side conductor extracted from the first vacuum container and a bus side conductor extracted from the second vacuum container are extended in a nearly equal direction to the axis. The load side conductor and the bus side conductor extended from the first vacuum container and the second vacuum container are insulated by bushings and disposed in the first vacuum container and the second vacuum container, respectively.

Further, the present invention provides a vacuum switch which comprises a first grounded vacuum container for containing a breaker; a second grounded vacuum container for containing an isolator and a grounding unit; an insulating spacer for electrically insulating the first vacuum container and the second vacuum container and for connecting the first and the second vacuum containers; insulating bushings extracted from the first and the second vacuum containers; a load side conductor extracted from the bushing of the first vacuum container; and a bus side conductor extracted from the bushing of the second container, wherein a movable blade of a movable electrode of the breaker and an operating rod for driving the grounding conductor are extended in a side where an operating mechanism is disposed. Further, the present invention provides a vacuum switchgear comprising a vacuum switch which comprises a first grounded vacuum container for containing a breaker, a second grounded vacuum container for containing an isolator and a grounding unit, an insulating spacer for electrically insulating the first vacuum container and the second vacuum container and for connecting the first and the second vacuum containers, insulating bushings extracted from the first and the second vacuum containers, a load side conductor extracted from the bushing of the first vacuum container, and a bus side conductor extracted from the bushing of the second container, a movable blade of a movable electrode of the breaker and an operating rod for driving the grounding conductor being extended in a substantially equal direction; an operating mechanism connected to the movable blade and the operating rod; and a control unit for controlling the operating mechanism.

Furthermore, the present invention provides a vacuum switchgear comprising a vacuum switch which comprises a first grounded vacuum container for containing a breaker, a second grounded vacuum container for containing an isolator and a grounding unit, and an insulating spacer for electrically insulating the first vacuum container and the second vacuum container, the first vacuum container and the second vacuum container being disposed substantially on a single axis, bushings extracted from the first container and the second container being extended in a nearly equal direction from the axis; a movable blade of the breaker and an operating rod of the grounding unit are disposed in a nearly equal direction; and an operating mechanism for the movable blade and the operating rod.

Further, the present invention provides a vacuum switchgear which comprises a first grounded vacuum container for containing a breaker; a second grounded vacuum container for containing an isolator and a grounding unit; and an insulating spacer for electrically insulating the first vacuum container and the second vacuum container, the first vacuum container and the second vacuum container being disposed substantially on a single axis, a link for connecting operating rods of the isolator and the grounding unit being disposed between an operation box containing an operating mechanism portion for operating a movable blade of the breaker and the second vacuum container.

Further, the present invention provides a vacuum switchgear which comprises a first grounded vacuum container for containing a breaker; a second grounded vacuum container for containing an isolator and a grounding unit; and an insulating spacer for electrically insulating the first vacuum container and the second vacuum container, wherein connecting portions of load side conductors arranged in the first vacuum container are disposed in a direction of arranging the first vacuum container and the second vacuum container and in a direction perpendicular to the direction of arranging the first vacuum container and the second vacuum container.

### BRIEF DESCRIPTION OF DRAWINGS

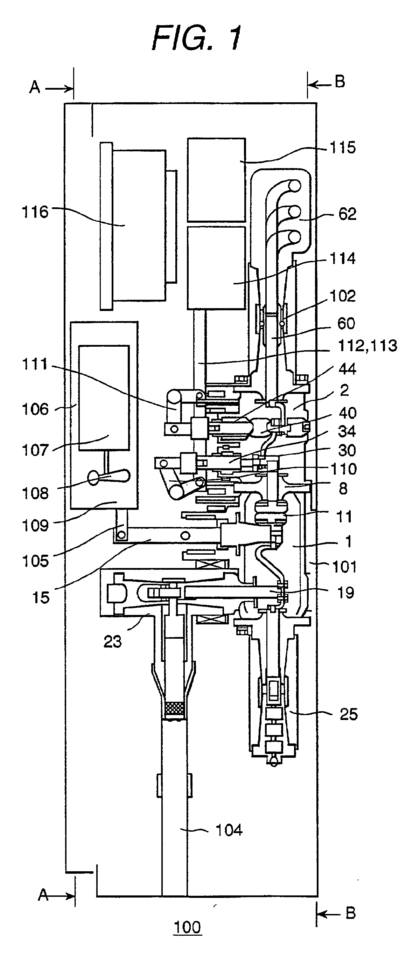

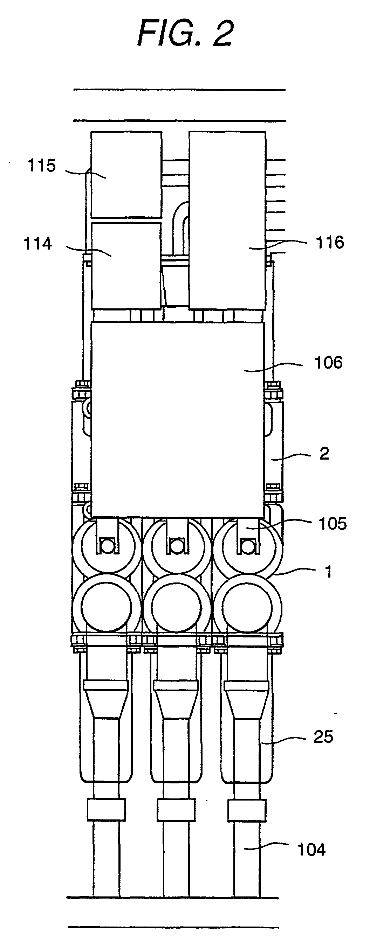

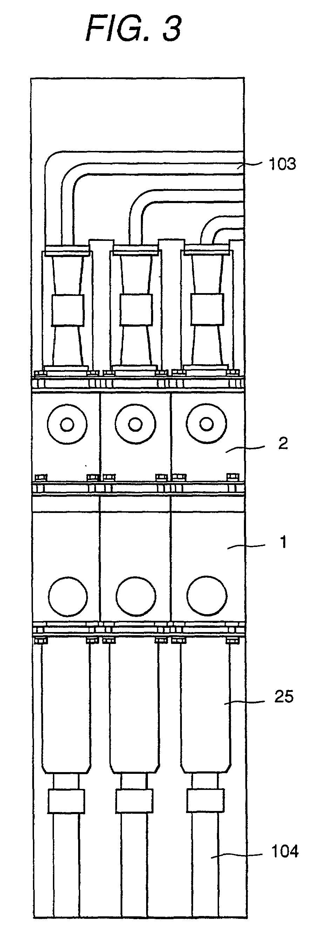

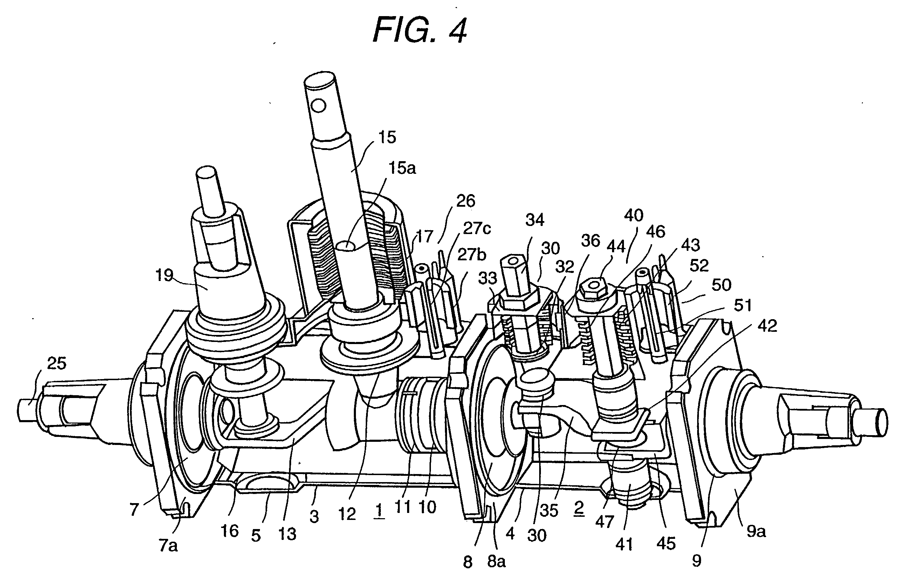

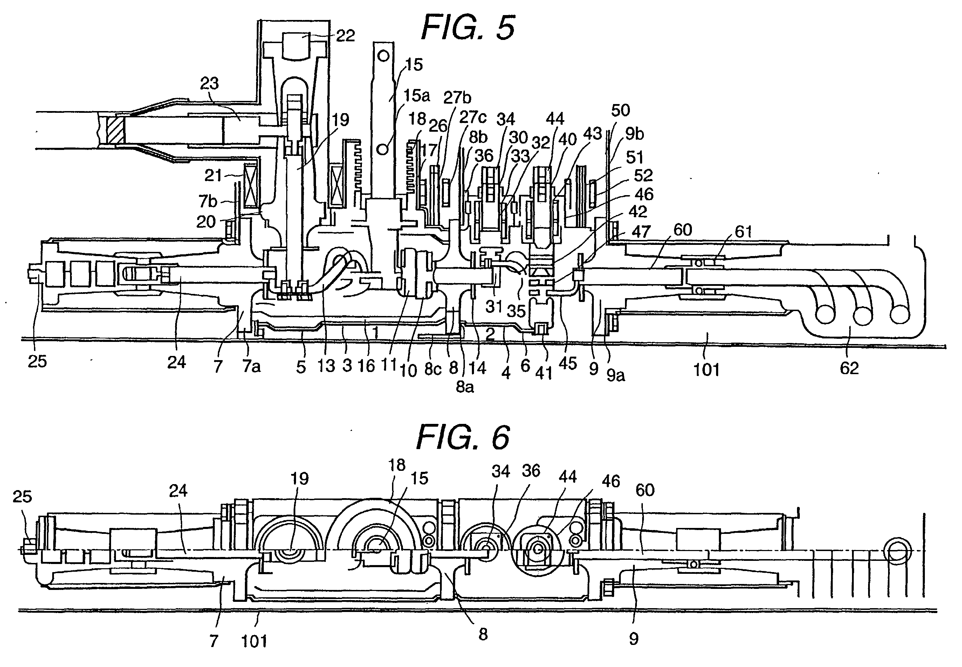

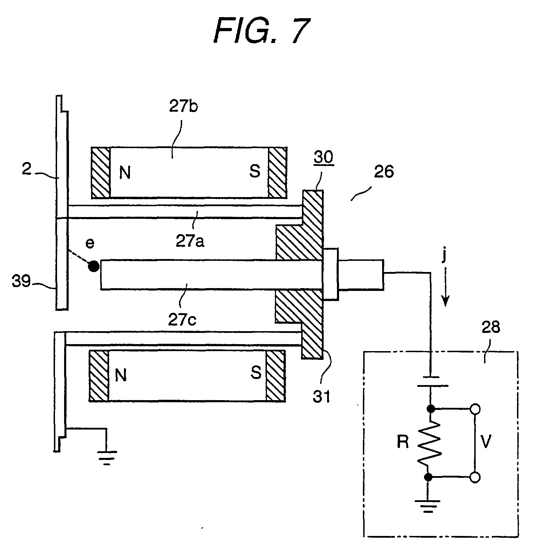

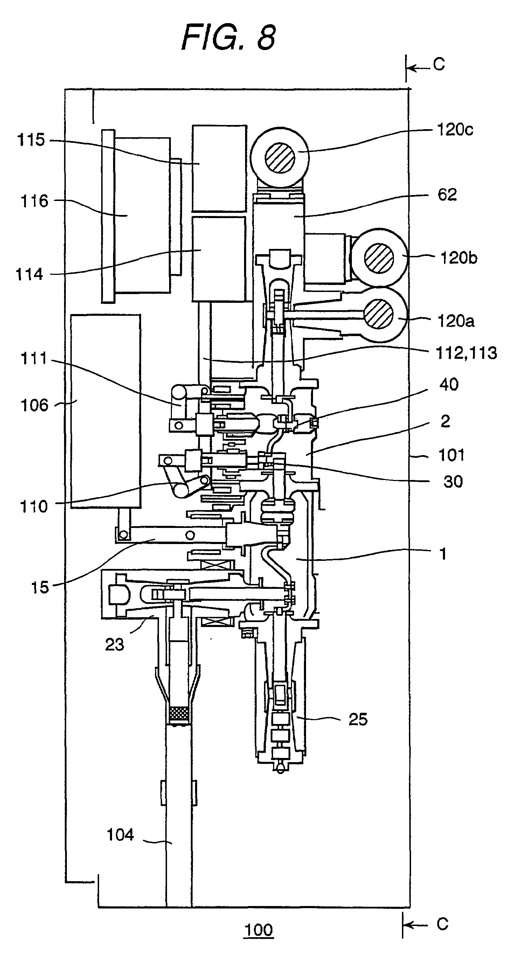

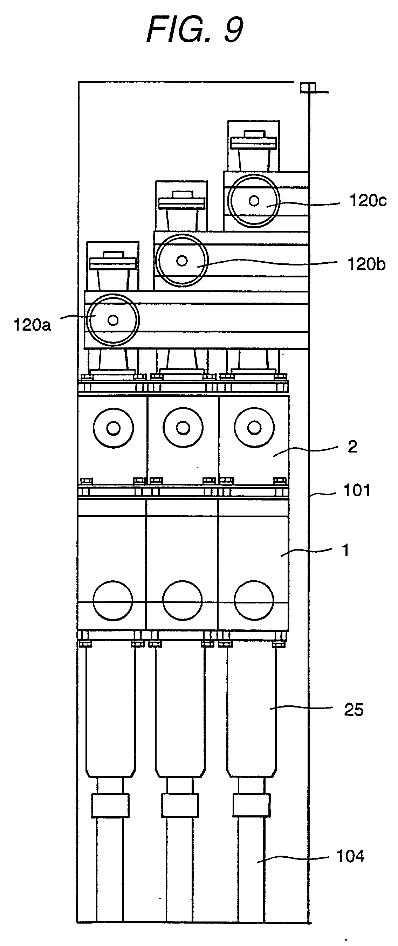

FIG. 1 is a vertical cross-sectional view showing a first embodiment of a vacuum switchgear in accordance with the present invention; FIG. 2 is a side view showing the vacuum switchgear being taken on the plane of the line A-A of FIG. 1; FIG. 3 is a side view showing the vacuum switchgear being taken on the plane of the line B-B of FIG. 1; FIG. 4 is a partially cutaway perspective view showing the vacuum switch in the first embodiment; FIG. 5 is a vertical cross-sectional view showing the vacuum switch in the first embodiment; FIG. 6 is a partially cross-sectional horizontal view showing the vacuum switch in the first embodiment; FIG. 7 is a vertical cross-sectional view showing a vacuum measurement apparatus used in the embodiment; FIG. 8 is a vertical cross-sectional view showing a second embodiment of a vacuum switchgear in accordance with the present invention; and FIG. 9 is a side view showing the vacuum switchgear being taken on the plane of the line C-C of FIG. 8.

### DESCRIPTION OF THE PREFERRED EMBODIMENTS

A first embodiment of the present invention will be described below, referring to FIG. 1 to FIG. 7. FIG. 1 is a vertical cross-sectional view showing the first embodiment of a vacuum switchgear in accordance with the present invention; FIG. 2 is a side view showing the vacuum switchgear being taken on the plane of the line A-A of FIG. 1; FIG. 3 is a side view showing the vacuum switchgear being taken on the plane of the line B-B of FIG. 1; FIG. 4 is a partially cutaway perspective view showing the vacuum switch in the first embodiment; FIG. 5 is a vertical cross-sectional view showing the vacuum switch in the first embodiment; FIG. 6 is a partially cross-sectional horizontal view showing the vacuum switch in the first embodiment; and FIG. 7 is a vertical cross-sectional view showing a vacuum measurement apparatus used in the embodiment.

As shown in FIG. 1, in the switchgear 100 in the present embodiment, a first vacuum container 1 containing a breaker and a second vacuum container 2 containing a grounding unit 30 and an isolator 40 are disposed in one side wall inside a metal box outer case 101, and the second vacuum container 2 is connected to the first vacuum container 1 through an insulating spacer 8. A bus side conductor 60 inside the second vacuum container 2 is connected to a bus connector portion 62 (also called as a cable head 62) through a tulip contact 102, and further connected to a bus 103. The buses 103 are led out successively varying the leading-out height for the three phases in the direction of arranging the first and the second vacuum containers, but the buses 103 are arranged within the height of an operation box 115 as shown in FIG. 1.

On the other hand, a load side conductor 19 inside the first vacuum container 1 is connected to a load side conductor 104 through a cable head 23. A meter terminal 25 is connected to the bottom of the first vacuum container 1. As to be described later, the connecting portion of the cable head 23 to the load side conductor 19 and an electric connecting portion of the terminal 25 to the load side conductor 19 are formed in an equal shape so that the cable head 23 can be connected to the terminal 25 side. Since the cable head 23 can be connected at two position as described above, the freedom of wiring of the load side conductor 104 can be increased. Further, since the cable head 23 is formed so as to be connected from the vertical direction, the cable head can be easily connected even if the load side conductor 104 is stiff.

The first vacuum container 1 and the second vacuum container 2 are grounded as to be described later, and the side walls are in the grounded electric potential. Therefore, the first vacuum containers 1 and the second vacuum containers 2 for three phases can be arranged in contact with or adjacently to each other. Further, they can be arranged adjacently to the metal box outer case 101.

A movable blade 15 operating a movable electrode 11 of the breaker inside the first vacuum container 1 is connected to an operating rod 105 joined with a pin. The operating rod 105 is connected to an operation box 106 of the breaker containing an operating mechanism portion. The operating mechanism portion is composed of a drive portion 107, a link 108 operated three-phase portions together, and a wipe spring 109.

A rod 34 and a rod 44 for operating movable electrodes of a grounding unit 30 and an isolator 40 inside the second vacuum container 2 are connected to a link 110 and a link 111 with pins, respectively. The links 110 and 111 are arranged between the second vacuum container 2 and the operation box 106. The links 110 and 111 are connected to individual operation rods 112 and 113, respectively. The operation rod 112 is connected to an operation box 114 containing an operating mechanism portion for operating the ground unit 30, and the operation rod 113 is connected to an operation box 115 containing an operating mechanism portion for operating the isolator 40.

The operation rod 112 is extracted from a side of the operation box 114, and connected to the links 110 for three phases together from the side direction so that the movable electrodes of the grounding units 30 for three phases are operated together by the operating mechanism portion contained in the operation box 114. The operation rod 113 is extracted from a side of the operation box 115 to the opposite side of the operation rod 112, and connected to the links 111 for three phases together from the side direction. The movable electrodes of the isolators 40 for three phases are operated together by the operating mechanism portion contained in the operation box 115.

As shown in FIG. 1 and FIG. 2, a box 116 containing a protective relay is arranged at a position above the operation box 106 and side of the operation boxes 114, 115. When the protective relay detects occurrence of a failure, the protective relay controls the operating portions 106, 114 and 115 to control open-and-close operation of the breaker , the grounding unit 30 and the isolator 40. These operation boxes 106, 114 and 115 and the box 116 compose an operation compartment. Since the first vacuum container 1 and the second vacuum container 2 are in the ground electric potential as to be described later, the individual components of the operation compartment can be arranged adjacently to these vacuum containers and accordingly the whole size of the switchgear can be made compact.

The cylindrical side wall 3 of the first vacuum container 1 is formed of an electric conductive material, for example, stainless steel, and the side wall 3 is fixed and supported by an insulating spacer 7 portion and an insulating spacer 8 portion. The cylindrical side wall 4 of the second vacuum container 2 is formed of an electric conductive material, for example, stainless steel, and the side wall 4 is fixed and supported by an insulating spacer 8 portion and an insulating spacer 9 portion. Electric conductive fixing frames 7a, 8a, 9a are disposed in the outer peripheral portions of the insulating spacers 7, 8, 9, and the side wall 3 is fixed by the fixing frames 7a, 8a and the side wall 4 is fixed by the fixing frames 8a, 9a. Support portions 7b, 8b, 8c, 9b for grounding are provided in the fixing frames 7a, 8a, 9a to ground the side wall 3 and the side wall 4 through the operation compartment. In a case where the fixing frames 7a, 8a, 9a are formed of a ceramic material, the ceramic material surfaces are metallized with an electric conductive material.

A conductor 14 is arranged in the central portion of the insulating spacer 8, and a fixed electrode 10 is arranged in the conductor 14 inside the first vacuum container 1. The movable electrode 11 is arranged opposite to the fixed electrode 10 to form the breaker. The movable blade 15 formed of an insulator is connected to the operation compartment to rotate the movable electrode 11 around a fulcrum 15a. Connection and disconnection between the movable electrode 11 and the fixed electrode 19 are performed by rotating motion of the movable blade 15. A cylindrical cylinder portion 17 is provided on the side wall 3, and the cylinder portion 17 and the movable blade 15 are connected with a bellows 18.

An arc shield 16 is arranged so as to cover the surrounding of the fixed electrode 10 and the movable electrode 11, and the arc shield 16 extends to a position near the insulating spacer 7. A brim portion 12 is arranged in the movable electrode 11 between the join portion of the movable blade 15 and the bellows 15 and the arc shield 16 to prevent ark from entering around the bellows 18 side. The inner surface of the cylinder portion 17 is coated with an insulator formed by melt-spraying at least one kind of a ceramic, aluminum oxide (Al₂O₃) and zirconium oxide (ZrO₂) onto the inner surface in order to protect the inner surface from the arc leaking through an open portion of the arc shield 16.

The load side conductor 19 is arranged so as to extend in the same direction of the movable blade 15, and the load side conductor 19 and the movable electrode 11 are connected to each other with a flexible conductor 13. A projecting portion is formed at a position on the side wall 3 opposite to the load side conductor 19, and the projecting portion 5 is used to attach the load side conductor when the load side conductor 19 is required to be disposed in the opposite side.

Since the breaker is composed of the drive system to rotate the movable blade 15 around the fulcrum 15a as described above, the load side conductor can be connected in one side of the first vacuum container, and the second vacuum container containing the isolator and the grounding unit can be connected in the other side in series. Accordingly, the vacuum switchgear can be made small in size. Further, since the first vacuum container containing the breaker and the second vacuum container containing the isolator and the grounding unit are constructed to be joined to each other with the insulating spacer, reliability of the insulating property can be improved. Furthermore, since the breaker, the isolator and the grounding unit can be individually assembled, freedom of constructing the switchgear can be increased.

The load side conductor 19 is fixed to and supported by a load side bushing 20 made of a ceramic material fixed onto the side wall 3. A current transformer 21 is arranged in the outer peripheral side of the load side bushing 20. A terminal 22 in the outer periphery of which is fixed to and supported by an insulator made of a ceramic material is formed at a position on an extended line from the load side conductor 19. At the end portion of the load side bushing 20, the load side conductor 19 is connected to the cable head 23, and the cable head 23 is extended in the direction of arranging the conductor 14, the movable electrode 11 and the fixed electrode 10. A conductor 24 is arranged so as to penetrate the central portion of the insulating spacer 7 to form a terminal 25 for measuring voltage or the like. By attaching the terminal 25 as described above, voltage can be measured.

A vacuum measurement unit 26 for measuring a degree of vacuum of the first vacuum container is attached onto the grounded side wall 3. The vacuum measurement unit 26 is a magnetron type measurement unit, and attached onto the side wall 3 of the metallic container. As shown in FIG. 7, the vacuum measurement unit 26 is composed of a coaxial electrode 27a and a magnetic field generating coil or a ring-shaped permanent magnet 27b arranged around the coaxial electrode. An inner electrode 27c of the coaxial electrode 27a is connected to an electric power supply circuit 28, and a negative direct current voltage is applied to the inner electrode 27c from the electric power supply circuit 28. A degree of vacuum is measured by measuring an ion current of positive ions generated by ionizing remaining gas through collision with rotationally moving electrons e emitted from the inner electrode 27c.

The grounding unit 30 and the isolator 40 are arranged in the second vacuum container 2. A fixed electrode 31 of the grounding unit 30 is attached to conductor 14, and the fixed electrode 31 is electrically connected to a fixed electrode 42 of the isolator 40 through a flexible conductor 35. The fixed electrode 42 is fixed to and supported by the bus side conductor 60 and an insulator 41 fixed to a projecting portion 6 provided on the side wall 4. A movable electrode 32 is arranged opposite to the fixed electrode 31, and the movable electrode 32 can be connected with and disconnected from the fixed electrode 31 by reciprocal motion of a rod 34 operated by an operating unit. A bellows 33 is arranged between a cylinder portion 36 provided on the side wall 4 and the movable electrode 32 to keep air-tightness of the second vacuum container 2. A movable electrode 47 of the isolator 40 is arranged opposite to the fixed electrode 42 and can be connected with and disconnected from the fixed electrode 42 by reciprocal motion of a rod 44 operated by an operating unit, not shown. A bellows 43 is arranged between a cylinder portion 46 provided on the side wall 4 and the movable electrode 47 to keep air-tightness of the second vacuum container 2. A vacuum measurement unit 50 for measuring a degree of vacuum of the second vacuum container 2 is attached onto the side wall 4. As similar to the vacuum measurement unit 26, the vacuum measurement unit 50 is composed of a coaxial electrode 51 and a magnetic field generating coil or a ring-shaped permanent magnet 52 arranged around the coaxial electrode. An inner electrode of the coaxial electrode 51 is connected to an electric power supply circuit, and a negative direct current voltage is applied to the inner electrode from the electric power supply circuit. In this embodiment, since the vacuum measurement units 26, 50 are provided in the first vacuum containment 1 and the second vacuum containment 2, the degrees of vacuum can be monitored during supplying electric power and an alarm is sounded or a signal is transmitted to a monitoring system because the insulating property is deteriorated when the degree of vacuum becomes below 10⁻⁴ torr. Here, the meaning that the degree of vacuum becomes below 10⁻⁴ torr is, for example, that the degree of vacuum becomes 10⁻³ torr.

In the vacuum switch of this embodiment, since the movable blade 15 and the rods 34, 44 are arranged in the same direction and accordingly the operating units can be arranged in the operation compartment together, the system can be made simple in structure and compact in size. Further, since the operating units can be assembled at assembling the operation compartment, the assembling ability is better. Furthermore, since the measurement units such as the vacuum measurement units, the current transformer and the like are arranged in the movable blade side, they can be assembled at assembling the operation compartment, the switchgear can be made small in size and the assembling ability can be improved.

The bus side conductor 60 is connected to the bus connecting portion 62 through a connecting portion 61. The connecting portions of the bus connecting portions 62 for three phases are arranged in the arranging direction of the first vacuum container 1 and the second vacuum container 2. The space inside the vacuum measurement unit is communicated with the vacuum container, and accordingly the safety and the reliability of the vacuum switch can be improved by measuring or monitoring the degree of vacuum the vacuum containers using the vacuum measurement units. As the vacuum measurement unit itself, a conventional unit used in a vacuum breaker may be employed.

The insulating spacers 7, 9 and the bushing 20 may be formed in a similar shape, and thereby, the parts can be commonly used. The insulating spacer 8 may be omitted. In that case, in order to protect the bellows 33, 43 from the arc produced at disconnecting the movable electrode 11 from the fixed electrode 10, the inner peripheral surfaces of the bellows 33, 34 have arc shields which are formed by coating the inner surface with at least one kind of insulator out of a ceramic, aluminum oxide (Al₂O₃) and zirconium oxide (ZrO₂) by melt-spraying. Operation of the switchgear constructed as described above will be described below. During supplying electric power, the grounding unit 30 is in an open state, and the isolator 40 and the breaker are in a closed state. The electric power supplied through the connecting portion 62 with the bus is supplied to the load side through the bus side conductor 60, the conductor 45, the conductor 14, the fixed electrode 10, the movable electrode 11, the flexible conductor 13 and the bushing 20.

When an accident occurs in the bus or the load side, a signal for breaking the breaker is output from the control unit by a signal from a detection system, not shown, and the movable blade 15 is rotated by the operation unit. By rotating the movable blade 15, the movable electrode 11 is moved from the closed position to the open position to perform breaking. At that time, an arc is generated between the fixed electrode 10 and the movable electrode 11. However, since the ark shield 16 is arranged inside the first vacuum container 1, most part of the arc is shielded by the arc shield 16 to protect the side wall 3. The arc shield 16 has the opening portion at the portion of rotating the movable blade 15, but the coating formed by melt-splaying the insulator protects the side wall from the arc leaking through the opening portion. As the breaker is broken, the rod 44 of the isolator 40 is moved by the operating unit by a control signal from the control unit to disconnect the movable electrode 47 from the fixed electrode 42, and thus the isolator becomes in an isolated state. After that, the rod 34 of the grounding unit 30 is moved so that the movable electrode 32 is mad in contact with the fixed electrode 31 to be grounded. Further, since the breaker, the isolator and the grounding unit can be individually assembled, there is an effect in that freedom of constructing the switchgear can be increased. In the embodiment described above, since the movable blade and the operating rod are arranged in the same direction or since the measurement units such as the vacuum measurement units, the current transformer and the like are arranged in the movable blade side, they can be assembled at assembling the operation compartment, the switchgear can be made small in size and the assembling ability can be improved.

A second embodiment of the present invention will be described below, referring to FIG. 8 and FIG. 9. FIG. 8 is a vertical cross-sectional view showing the second embodiment of a vacuum switchgear in accordance with the present invention, and FIG. 9 is a side view showing the vacuum switchgear being taken on the plane of the line C-C of FIG. 8.

The switchgear of the present embodiment is constructed similarly to the embodiment shown in FIG. 1 to FIG. 3, but the construction of the cable head 62 is different. In the switchgear in the present embodiment, buses 120a, 120b for two phases from the cable heads 62 are successively arranged in the height direction and projected in the side of the metal box outer case 101. A bus 120c for one phase is arranged in the direction of arranging the first vacuum container 1 and the second vacuum container 2. By constructing as described above, as shown in FIG. 9, the buses 120a, 120b and 120c can be extended in the arranging direction of the vacuum switches for three phases, and at the same time the buses 120a, 120b and 120c can be extended in the arranging direction of the first and the second containers. Therefore, there is an effect in that freedom of wiring the buses can be increased.

### INDUSTRIAL APPLICATION

As having been described above, since the breaker is composed of the drive system rotating the movable blade around the fulcrum, the load side conductor can be disposed in one side of the first vacuum container and the second vacuum container containing the isolator and the grounding unit can be disposed in the other side. Therefore, the vacuum switchgear can be made small in size. Further, since the first vacuum container containing the breaker and the second vacuum container containing the isolator and the grounding unit are joined with the insulating space, reliability on the insulation property can be improved. Furthermore, since the breaker, the isolator and the grounding unit can be individually assembled, freedom on constructing the switchgear can be increased.

## Claims

1. A vacuum switch comprising a first grounded vacuum container for containing a breaker; a second grounded vacuum container for containing an isolator and a grounding unit; and an insulating spacer for electrically insulating said first vacuum container and said second vacuum container, wherein said first vacuum container and said second vacuum container are disposed substantially on a single axis, and bushings extracted from said first container and said second container are extended in a nearly equal direction from said axis.

2. A vacuum switch according to claim 1, wherein a movable blade for operating a movable electrode of said breaker and rods for operating a movable conductor of said isolator and said grounding unit are disposed in a nearly equal direction to said axis.

3. A vacuum switch, wherein a first grounded vacuum container for containing a breaker and a second grounded vacuum container for containing an isolator and a grounding unit are disposed on a single axis, and a load side conductor extracted from said first vacuum container and a bus side conductor extracted from said second vacuum container are extended in a nearly equal direction to said axis.

4. A vacuum switch according to claim 3, wherein said load side conductor and said bus side conductor extended from said first vacuum container and said second vacuum container are insulated by bushings and disposed in said first vacuum container and said second vacuum container, respectively.

5. A vacuum switch comprising a first grounded vacuum container for containing a breaker; a second grounded vacuum container for containing an isolator and a grounding unit; an insulating spacer for electrically insulating said first vacuum container and said second vacuum container and for connecting said first and said second vacuum containers; insulating bushings extracted from said first and said second vacuum containers; a load side conductor extracted from said bushing of said first vacuum container; and a bus side conductor extracted from said bushing of said second container, wherein a movable blade of a movable electrode of said breaker and an operating rod for driving said grounding conductor are extended in a side where an operating mechanism is disposed.

6. A vacuum switchgear comprising a vacuum switch which comprises a first grounded vacuum container for containing a breaker, a second grounded vacuum container for containing an isolator and a grounding unit, an insulating spacer for electrically insulating said first vacuum container and said second vacuum container and for connecting said first and said second vacuum containers, insulating bushings extracted from said first and said second vacuum containers, a load side conductor extracted from said bushing of said first vacuum container, and a bus side conductor extracted from said bushing of said second container, a movable blade of a movable electrode of said breaker and an operating rod for driving said grounding conductor being extended in a substantially equal direction; an operating mechanism connected to said movable blade and said operating rod; and a control unit for controlling said operating mechanism.

7. A vacuum switchgear comprising a vacuum switch which comprises a first grounded vacuum container for containing a breaker, a second grounded vacuum container for containing an isolator and a grounding unit, and an insulating spacer for electrically insulating said first vacuum container and said second vacuum container, said first vacuum container and said second vacuum container being disposed substantially on a single axis, bushings extracted from said first container and said second container being extended in a nearly equal direction from said axis; a movable blade of said breaker and an operating rod of said grounding unit are disposed in a nearly equal direction; and an operating mechanism for said movable blade and said operating rod.

8. A vacuum switchgear comprising a first grounded vacuum container for containing a breaker; a second grounded vacuum container for containing an isolator and a grounding unit; and an insulating spacer for electrically insulating said first vacuum container and said second vacuum container, said first vacuum container and said second vacuum container being disposed substantially on a single axis, a link for connecting operating rods of said isolator and said grounding unit being disposed between an operation box containing an operating mechanism portion for operating a movable blade of said breaker and said second vacuum container.

9. A vacuum switchgear comprising a first grounded vacuum container for containing a breaker; a second grounded vacuum container for containing an isolator and a grounding unit; and an insulating spacer for electrically insulating said first vacuum container and said second vacuum container, wherein connecting portions of load side conductors arranged in said first vacuum container are disposed in a direction of arranging said first vacuum container and said second vacuum container and in a direction perpendicular to the direction of arranging said first vacuum container and said second vacuum container.
